# EUROPEAN PATENT APPLICATION

(11) **EP 1 103 884 A1**
(43) Date of publication of application: **30.05.2001**
(21) Application number: 99309370.7
(22) Date of filing: 24.11.1999
(51) Int. Cl.: G06F 3/033

(54) **Control interface for a 3D mouse, track ball or track board**

(71) Applicant: Yang, Tai-Her, Si-Hu Town, Dzan-Hwa (TW); Chen, Yang, Sanchung City, Taipei Hsien (TW)
(72) Inventor: Yang, Tai-Her, Si-Hu Town, Dzan-Hwa (TW); Chen, Yang, Sanchung City, Taipei Hsien (TW)
(74) Representative: Pratt, David Martin

(57) **Abstract**

The control method of the common translation control interface of the 3D mouse, track ball or track board is an innovated design which is comprised of one single rolling ball which is matched with function selecting buttons and operation on the corresponding control hardware and software through a common translation control interface for selection to do conventional arrow translations in X and Y directions or the combined translations in X and Y directions as well as to do up and down page rolling and left and right page shifting functions or to further have page rolling and shifting functions in combined directions, whereof the design is characterized to have a simple structure, easy control and provides a sense of direction which concurs more with the human engineering requirements.

## Description

### BACKGROUND OF THE INVENTION

The conventional 3D mouse or track ball are all installed with rolling balls or track boards to provide arrow translations in X or Y directions or the combined translation in X and Y directions, and are further installed with additional rolling ball to do left and right page shifting as well as up and down page rolling functions, whereby they have complicated structures and are costly, thereof the invention is related to an innovated design of the control method of a common translation control interface of the 3D mouse, track ball or track board aimed at improving the aforesaid disadvantages.

### BRIEF SUMMARY OF THE INVENTION

The invention is comprised of one single rolling ball which is matched with function selecting buttons and operation on the corresponding control hardware and software through a common translation control interface for selection to do conventional arrow translations in X and Y directions or the combined translations in X and Y directions as well as to do up and down page rolling and left and right page shifting functions or to further have page rolling and shifting functions in combined directions, whereof it is characterized to have a simple structure, easy control and provides a sense of direction which concurs more with the human engineering requirements.

### BRIEF DESCRIPTION OF THE DRAWINGS

Figure 1 is a flow chart of the control method of the invention illustrating the common translation control interface for page rolling and shifting functions in X or Y directions

Figure 2 is a flow chart of the control method of the invention illustrating the common translation control interface for page rolling and shifting functions in X or Y directions and combined directions

### DETAILED DESCRIPTION OF THE INVENTION

The mouse, track ball and track board have long been the simple control interfaces, and in recent years, due to the demands for page rolling and shifting in data reading purposes, the mouse is mostly further installed with page shifting functions, which is named as the 3D mouse, whereof the 3D mouse in the market is usually provided with independent rolling ball for directly selection for left and right page shifting or up and down page rolling, whereof the additionally installed independent rolling ball is either provided with a single rolling ball and through a button to select up and down page rolling or left and right page shifting functions, or is individually provided with up and down functioning rolling ball and left and right functioning rolling ball to be directly operated individually, therefore, rolling ball structure and manufacture cost for the conventional 3D mouse or 3D track ball and 3D track board must be increased corresponding to the conventional mouse, track ball and track board; thereof to improve the aforesaid disadvantages, the progressiveness of the design is mainly characterized in the following: 1) The translation control interface is still following the conventional mouse, track ball or track board for arrow translations in X, Y directions and combined directions. 2) It can be further switched for page rolling and shifting functions in left and right directions or up and down directions or combined directions, whereby to constitute the function of the common translation control interface of the 3D mouse or track ball or track board, thereby not only that the sense of direction in page rolling and shifting is clear, but the installation of the independent rolling ball can be omitted to reduce the operating parts, which are advantageous for both cost and operation.

The various hardware structures for matching with the design are comprised of the following:
- The casing: It includes the casings for the translation control interfaces of the mouse, or track ball or track board for carrying the relevant circuits and parts;
- The translation control interface: It includes the rolling friction mouse ball, finger triggered track ball, as well as the resistance detecting or capacitance detecting or photo detecting touching or non-touching type track boards, whereof it is provided with arrow operating functions or page rolling and shifting functions;
- An Operating function select button : It includes the electromechanical type pushing operated switch or push buttons or changeover switches or sensor switches for providing various function selections, wherein it is specially referred to the selected functions of selecting either the rolling ball or track board for arrow operating functions or the page rolling and shifting functions.

For the common translation control interface of the 3D mouse, or the track ball or the track board, besides of that its rolling ball or track board can be used for planetary arrows in X and Y directions, it can be utilized in the operating mode for page rolling and shifting during data reading and map searching, which is either achieved by independent left and right page shifting or independent up and down page rolling; or in addition to the independent left and right page shifting, and independent up and down page rolling functions, it can be further provided with combined up and down, left and right page rolling and shifting functions to improve the searching convenience, 'thereof the aforesaid operating methods and process steps of the two control types are described in the following:

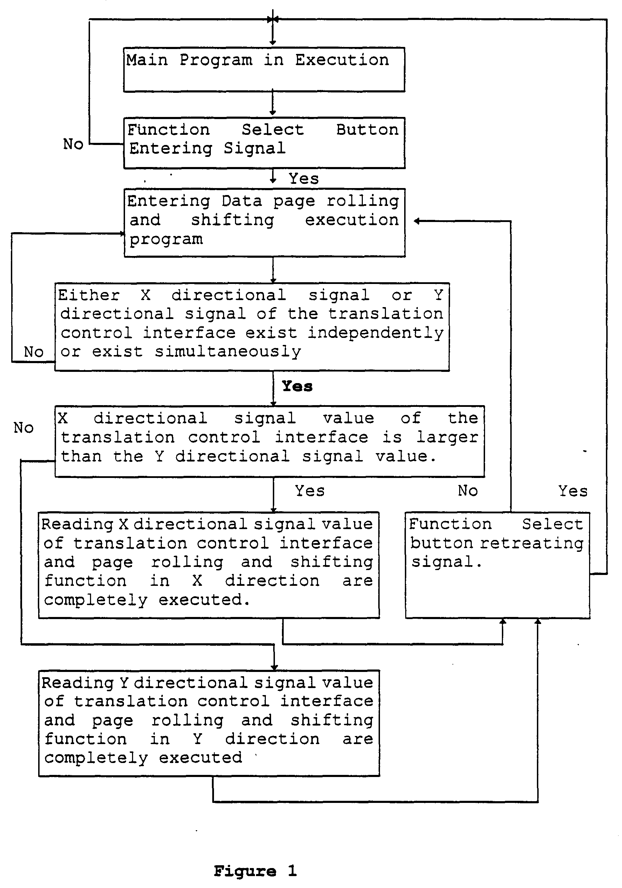

Figure 1 is a flow chart of the control method of the invention illustrating the common translation control interface for page rolling and shifting functions in X or Y directions

In the disclosed operating process of figure 1, the common translation control interface is at normal state for arrow function, and when the operating function select button is pushed to produce entering signal, the common translation control interface is then switched to page rolling and shifting function in X or Y directions (excluding the combined direction in X and Y directions), wherein it is further provided with judging function at the page rolling and shifting function state to select the one of larger directional signal values for execution priority when both X and Y directional signals exist; when the operating function select button produces retreating signal, then the common translation control interface is returned to the arrow operating function.

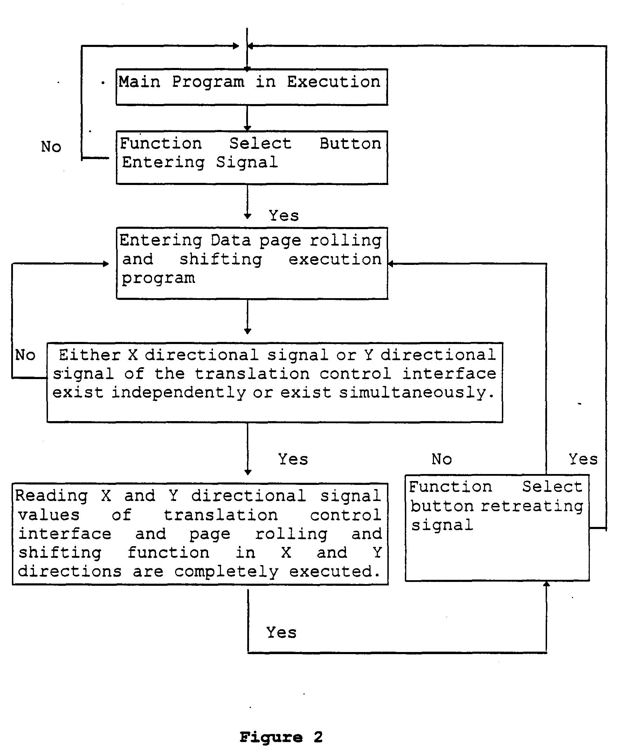

Figure 2 is a flow chart of the control method of the invention illustrating the common translation control interface for page rolling and shifting functions in X or Y directions and combined directions

In the disclosed operating process of figure 2, the common translation control interface is at normal state for arrow function, and when the operating function select button is pushed to produce entering signal, the common translation control interface is then switched to page rolling and shifting function in X or Y directions or the combined direction in X and Y directions, i.e. to perform the combined translation function according to the corresponding X and Y directional signals; when the operating function select button produces retreating signal, then the common translation control interface is returned to the arrow operating function.

The aforesaid operating processes in figures 1 and 2 can be applied in the conventional mouse or track ball or track board, wherein the hardware can be designed to provide function select button for external operation and related hardware or software for related sequential controls, as well as to correspondingly install with hardware or software with page rolling and shifting functions, thereby to match with the operating process requirements described in figures 1 and 2.

As summarized from the above descriptions for the control method of the common translation control interface of the 3D mouse, track ball or track board, it is concluded that the common translation control interface not only has a simple in structure, and is easy in operation, but also provides a sense of direction which concurs more with human engineering requirements; thereby it is innovative and practical, for that your lawful approval on the application is greatly appreciated.

## Claims

1. A control method of the common translation control interface of the 3D mouse, track ball or track board, wherein it is comprised of one single rolling ball which is matched with function selecting buttons and operation on the corresponding control hardware and software through a common translation control interface for selection to do conventional arrow translations in X and Y directions or the combined translations in X and Y directions as well as to do up and down page rolling and left and right page shifting functions or to further have page rolling and shifting functions in combined directions.

2. The control method of the common translation control interface of the 3D mouse, track ball or track board as in claim 1, wherein its up and down, left and right page rolling and shifting functions are as following: 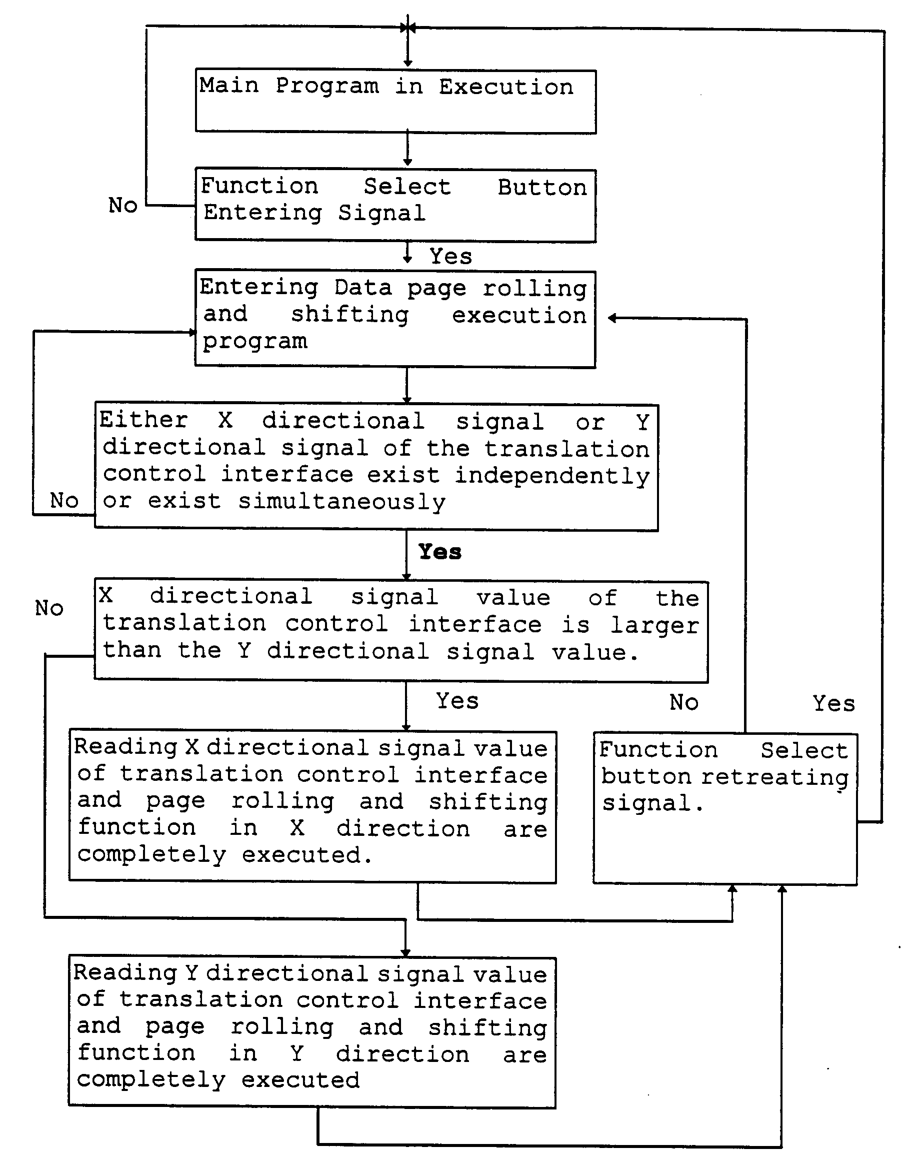 It is further provided with judging function at the page rolling and shifting function state to select the one of larger directional signal values for execution priority when both X and Y directional signals exist.

3. The control method of the common translation control interface of the 3D mouse, track ball or track board as in claim 1, wherein the process of the combined translation and rolling functions in X and Y directions is as following: 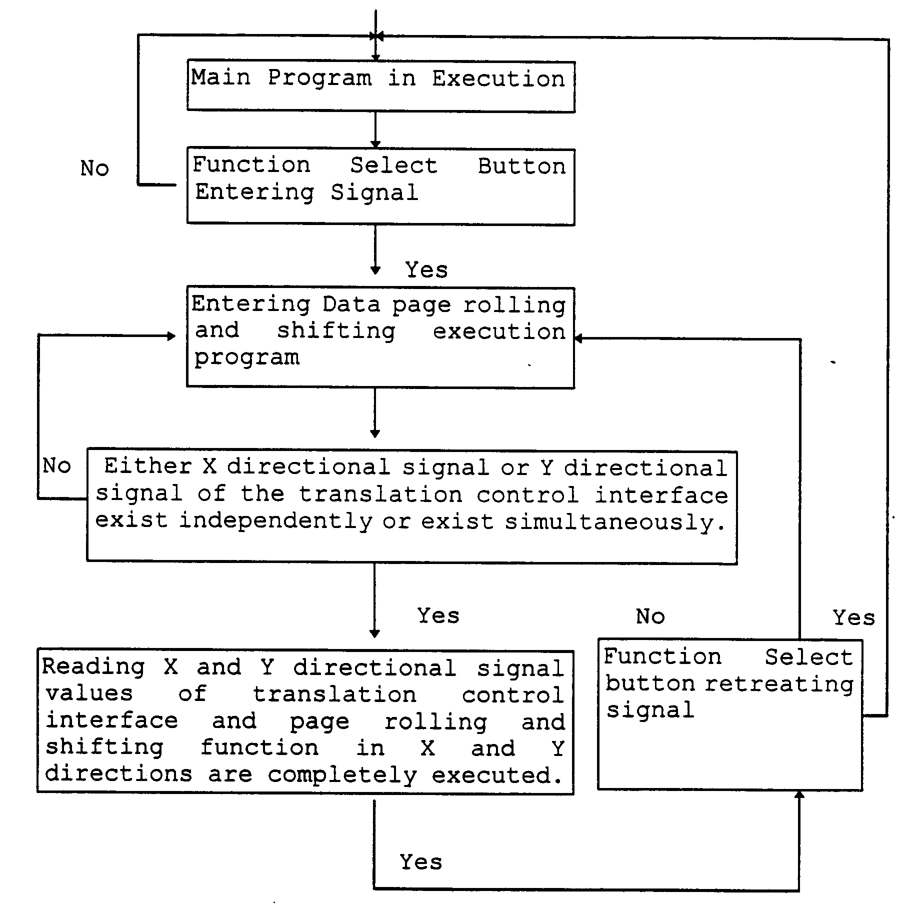 i.e. It can perform combined translation functions according to the corresponding X and Y directional signals.

4. The control method of the common translation control interface of the 3D mouse, track ball or track board as in claims 1, 2 or 3, wherein the operating functions includes that the common translation control interface is at normal state for arrow function, and when the operating function select button is pushed to produce entering signal, the common translation control interface is then switched to page rolling and shifting function in X or Y directions (excluding the combined direction in X and Y directions), and when the operating function select button produces retreating signal, then the common translation control interface is returned to the arrow operating function.

5. The control method of the common translation control interface of the 3D mouse, track ball or track board as in claims 1, 2 or 3, wherein the operating functions includes that the common translation control interface is at normal state for arrow function, and when the operating function. select button is pushed to produce entering signal, the common translation control interface is then switched to page rolling and shifting function in X or Y directions or the combined direction in X and Y directions, and when the operating function select button produces retreating signal, then the common translation control interface is returned to the arrow operating function.

6. The control method of the common translation control interface of the 3D mouse, track ball or track board as in claims 1, 2, 4 or 5, wherein the its hardware structures include the following:
• The casing: It includes the casings for the translation control interfaces of the mouse, or track ball or track board for carrying the relevant circuits and parts;
• The translation control interface: It includes the rolling friction mouse ball, finger triggered track ball, as well as the resistance detecting or capacitance detecting or photo detecting touching or non-touching type track boards, whereof it is provided with arrow operating functions or page rolling and shifting functions;
• An Operating function select button : It includes the electromechanical type pushing operated switch or push buttons or changeover switches or sensor switches for providing various function selections, wherein it is specially referred to the selected functions of selecting either the rolling ball or track board for arrow operating functions or the page rolling and shifting functions.
